# EUROPÄISCHE PATENTANMELDUNG

(11) **EP 4 171 171 A1**
(43) Veröffentlichungstag der Anmeldung: **26.04.2023**
(21) Anmeldenummer: 22203402.7
(22) Anmeldetag: 24.10.2022
(51) Int. Cl.: H05B 3/00

(54) **VORRICHTUNG UND VERFAHREN ZUM ERWÄRMEN VON LEBENSMITTELN**

(30) Priorität: 22.10.2021 DE 102021211949
(71) Anmelder: Deutsches Institut für Lebensmitteltechnik e.V., 49610 Quakenbrück (DE)
(72) Erfinder: Heinz, Volker, 49610 Quakenbrück (DE); Stute, Martin, 49610 Quakenbrück (DE)
(74) Vertreter: Taruttis, Stefan Georg

(57) **Zusammenfassung**

Die Erfindung betrifft eine Vorrichtung, die eine erste Elektrode und eine davon entlang der Oberfläche des Werkstücks beabstandet anzuordnende zweite Elektrode, von denen zumindest die erste Elektrode eingerichtet ist, in einem Abstand von dem Werkstück, das bevorzugt ein Lebensmittel ist, angeordnet zu werden und eingerichtet ist, dass der Abstand von einer leitfähigen Flüssigkeit, Wasser, ausgefüllt und überbrückt wird. Die leitfähige Flüssigkeit überragt die erste Elektrode und die zweite Elektrode und stellt einen elektrischen Kontakt jeder Elektrode mit dem Werkstück her. Dabei hat die leitfähige Flüssigkeit den Vorteil, z.B. gegenüber einer starren Kontaktfläche, dass unabhängig von der Oberflächenform des Werkstücks ein elektrischer Kontakt hergestellt wird, ohne dass die Elektrode selbst an dem Werkstück anliegen müsste.

## Beschreibung

Die vorliegende Erfindung betrifft eine Vorrichtung, die Verwendung der Vorrichtung und ein damit durchführbares Verfahren zum Erwärmen von Werkstücken, insbesondere Lebensmitteln, mittels Stromdurchflusses, auch Ohm'sches Erwärmen genannt. Die Werkstücke, nachfolgend stellvertretend auch als Lebensmittel bezeichnet, weisen bevorzugt eine gestreckte Form auf, z.B. mit einer Länge, die um einen Faktor von zumindest 2 oder zumindest 3 größer als der Durchmesser ist. Die Werkstücke, insbesondere Lebensmittel, erstrecken sich entlang ihrer Längsachse von ihrem ersten Ende zu ihrem gegenüberliegenden zweiten Ende. Die Lebensmittel sind optional ohne eine Hülle, bevorzugt in einer Hülle. In einer Ausführungsform kann das Lebensmittel eine ungegarte Lebensmittelmasse sein, z.B. Wurstbrät, die in einer Hülle oder einem elektrisch nicht leitfähigen Behälter angeordnet ist. Lebensmittel weisen bevorzugt eine Masse mit oder aus gemischten pflanzlichen und/oder tierischen Inhaltsstoffen auf, z.B. gemischte Massen auf Basis pflanzlicher Proteine und/oder Wurstbrät. Bevorzugte Lebensmittel sind Wurst oder wurstförmige Massen mit oder aus pflanzlichen Proteinen, bevorzugt in einer Hülle enthalten.

Die Vorrichtung hat den Vorteil, ein Verfahren zu ermöglichen, das Werkstücke, insbesondere Lebensmittel, energieeffizient und schnell erwärmt, insbesondere schnell über seinen gesamten Querschnitt. Ein weiterer Vorteil liegt darin, dass die Vorrichtung eingerichtet ist, die Oberfläche von Werkstücken, insbesondere Lebensmitteln, insbesondere deren Hülle, unbeschädigt zu lassen und z.B. die Oberfläche, insbesondere eine Hülle, nicht zu durchlöchern.

Werkstücke können auch aus beliebigen Werkstoffen sein, solange sie elektrisch leitfähig sind, z.B. aus Metall und/oder elektrisch leitfähigem Kunststoff.

Die WO 2019/134837 A1 beschreibt, dass Elektroden durch die Hülle in Wurst und durch das Brät hindurch gestochen und mit Strom beaufschlagt werden.

Die WO 2018/091557 A1 beschreibt Elektroden in Form eines Kamms, die in Wurst eingestochen und mit Strom beaufschlagt werden.

Der Erfindung stellt sich die Aufgabe, eine alternative Vorrichtung und ein alternatives Verfahren zum Erwärmen von Werkstücken, insbesondere Lebensmitteln, bereitzustellen, die bevorzugt geeignet sind, die Oberfläche der Werkstücke, insbesondere eine Hülle oder bei hüllenlosen Lebensmitteln eine Oberfläche, die aus Lebensmittelmasse besteht, nicht zu beschädigen.

Die Erfindung löst die Aufgabe mit den Merkmalen der Ansprüche und stellt insbesondere eine Vorrichtung bereit, die eine erste Elektrode und eine davon entlang der Oberfläche des Werkstücks beabstandet anzuordnende zweite Elektrode aufweist, von denen zumindest die erste Elektrode, optional beide Elektroden, eingerichtet sind, in einem Abstand von dem Werkstück, das bevorzugt ein Lebensmittel ist, angeordnet zu werden und eingerichtet ist, dass der Abstand von einer leitfähigen Flüssigkeit, die bevorzugt Wasser ist, ausgefüllt und überbrückt wird. Dabei ist die erste Elektrode bevorzugt an einem ersten Ende des Werkstücks angeordnet und die zweite Elektrode an einem dem ersten Ende entlang seiner Längsachse gegenüberliegenden zweiten Ende des Werkstücks. Entsprechend erstreckt sich das Werkstück entlang seiner Längsachse zwischen seinem ersten und zweiten Ende. Bevorzugt ist das Werkstück ein Lebensmittel, insbesondere eine ungegarte Lebensmittelmasse, die bevorzugt in einer elektrisch leitfähigen Hülle enthalten ist. In einer Ausführungsform sind die Elektroden an gegenüberliegenden Enden eines Behälters, auch als Vorratsbehälter bezeichnet, in einem Abstand voneinander angeordnet, so dass der Behälter angepasst ist, das Werkstück zwischen den Elektroden aufzunehmen, wobei zumindest eine Elektrode mit Abstand vom Werkstück angeordnet ist, und der Behälter eingerichtet ist, elektrisch leitfähige Flüssigkeit aufzunehmen, die den Abstand zwischen Elektroden und Werkstück ausfüllt. In dieser Ausführungsform liegt das Werkstück während des Verfahrens in dem Behälter und wird an seinen entlang seiner Längsachse gegenüberliegenden Enden von den Elektroden mit elektrischem Strom beaufschlagt. In dieser Ausführungsform ist die Vorrichtung z.B. zur Verwendung als Vorrichtung zur Erwärmung verschieden geformter Werkstücke nacheinander angepasst, da jeweils die Flüssigkeit den elektrischen Kontakt des Werkstücks zu den Elektroden herstellt. Der Behälter kann als elektrisch nicht leitfähiger Behälter ausgebildet sein und jeweils endständig angeordnet eine der Elektroden aufweisen. Optional ist der Behälter entlang einer Längsseite offen.

Die leitfähige Flüssigkeit überragt die erste Elektrode und die zweite Elektrode, so dass die leitfähige Flüssigkeit den Abstand zwischen jeder Elektrode und dem Werkstück überbrückt, und ist eingerichtet, einen elektrischen Kontakt jeder Elektrode mit einem Werkstück, das insbesondere ein Lebensmittel ist, herzustellen. Dabei hat die leitfähige Flüssigkeit den Vorteil, z.B. gegenüber einer starren Kontaktfläche, dass unabhängig von der Oberflächenform des Werkstücks ein elektrischer Kontakt hergestellt wird, ohne dass die Elektrode selbst an dem Werkstück anliegen müsste. Optional ist die erste Elektrode eingerichtet, die leitfähige Flüssigkeit kontinuierlich oder satzweise zu erneuern und weist eine Fördereinrichtung auf, um leitfähige Flüssigkeit kontinuierlich oder satzweise an die erste Elektrode zu fördern, z.B. in den Bereich, um den die erste Elektrode in einem Abstand vom Werkstück anzuordnen ist. Generell ist die Vorrichtung bzw. das Verfahren eingerichtet, Werkstücke jeweils einzeln zwischen erster und zweiter Elektrode anzuordnen und einzeln mittels Stromdurchflusses zu erwärmen, insbesondere mittels sog. Ohm'schen Erwärmens. Vorrichtung und Verfahren sind optional eingerichtet, dass jedes Werkstück einzeln zwischen zwei Elektroden angeordnet wird. In einer Ausführungsform, in der ein Behälter, an dessen entlang seiner Längsachse gegenüberliegenden Enden jeweils eine der Elektroden angeordnet ist, ist der Behälter eingerichtet zumindest ein Werkstück, optional genau 1 Werkstück, weiter optional zumindest zwei Werkstücke parallel aufzunehmen, jeweils mit der Längsachse des Werkstücks parallel zur Längsachse des Behälters und/oder mit den entlang der Längsachse des Werkstücks gegenüberliegenden Enden einer der Elektroden zugewandt angeordnet.

Die leitfähige Flüssigkeit, die den Abstand der ersten Elektrode zum Lebensmittel ausfüllt, wird in einer Ausführungsform durch eine Fördereinrichtung in den Abstand zwischen erster Elektrode und Lebensmittel gefördert, so dass die Flüssigkeit die erste Elektrode in elektrischen Kontakt mit dem Lebensmittel bringt. Die Vorrichtung ist eingerichtet, die Flüssigkeit als freien kontinuierlichen Strom zu fördern, der die erste Elektrode kontaktiert.

Generell ist bevorzugt, dass ein Vorratsbehälter für die leitfähige Flüssigkeit elektrisch isoliert ist und mit einer Zuführleitung, die bevorzugt nichtleitend ist, mit der ersten Elektrode verbunden ist. In dieser Ausführungsform ist die Fördereinrichtung eingerichtet, einen kontinuierlichen Flüssigkeitsstrom zu erzeugen, der die Elektrode überragt. Die Elektrode, die bevorzugt aus Metall ist, kann z.B. ein Rohr oder eine Rohrkappe sein, die mit der Zuführleitung verbunden ist oder einen Abschnitt der Zuführleitung für die Flüssigkeit bildet. Alternativ kann die Elektrode, hohl oder massiv, von einem beabstandeten Rohr, z.B. aus Metall oder aus Isoliermaterial, umfasst sein, wobei der Zwischenraum zwischen der Elektrode und dem Rohr eine Zuführleitung für die leitfähige Flüssigkeit bildet. Die Fördereinrichtung kann eine Pumpe sein oder die Anordnung eines Vorratsbehälters für die Flüssigkeit oberhalb der Elektrode und/oder eine Druckbeaufschlagung des Vorratsbehälters, z.B. mit Druckluft oder einem belasteten Druckkolben.

In einer weiteren Ausführungsform wird die leitfähige Flüssigkeit, die den Abstand der Elektrode zum Werkstück, das insbesondere ein Lebensmittel ist, ausfüllt, zumindest anteilig von einem porösen Material gehalten, das z.B. ein Gewebe, Schwamm und/oder eine flüssigkeitsdurchlässige, bevorzugt elastische Hülle ist, die die Flüssigkeit anteilig zurückhält und eine mit der Flüssigkeit benetzte Oberfläche aufweist. Eine solche Hülle ist z.B. an der Elektrode angebracht, überdeckt bevorzugt deren dem Werkstück zugewandte Oberfläche, und weiter bevorzugt ist der Zwischenraum zwischen der Hülle und der Elektrode mit der Zuführleitung verbunden. Das mit leitfähiger Flüssigkeit gefüllte poröse Material ist in dem Abstand zwischen der Elektrode und dem Lebensmittel angeordnet, so dass die leitfähige Flüssigkeit die Elektrode in elektrischen Kontakt mit dem Lebensmittel bringt. Das poröse Material und/oder die Hülle kann ein Isoliermaterial sein, dessen Porosität mit der leitfähigen Flüssigkeit gefüllt ist. Die Hülle kann z.B. ein poröses Gewebe, ein Gitter, z.B. aus Metall oder Kunststoff, ein Vlies oder poröse Folie sein, die in einem von leitfähiger Flüssigkeit gefüllten Abstand zur Elektrode angeordnet ist, z.B. die Elektrode endständig überragt. Bevorzugt wird leitfähige Flüssigkeit kontinuierlich oder satzweise in das poröse Material und/oder zwischen die flüssigkeitsdurchlässige Hülle und die Elektrode gefördert. Diese Ausführungsform hat den Vorteil, dass das poröse Material und/oder eine flüssigkeitsdurchlässige Hülle zwischen dem Werkstück und der Elektrode sich an die Oberfläche des Werkstücks anpassen und einen elektrischen Kontakt herstellen, ohne dass die Elektrode an die Werkstückoberfläche angepasst sein muss und ohne direktes Kontaktieren und ohne Verletzen der Oberfläche des Werkstücks durch die Elektrode.

Generell ist bevorzugt, dass die leitfähige Flüssigkeit eine elektrische Leitfähigkeit aufweist, die maximal 50 % von der elektrischen Leitfähigkeit des Lebensmittels abweicht, z.B. geringer als die Leitfähigkeit des Lebensmittels ist, und insbesondere größer als die Leitfähigkeit des Lebensmittels ist, oder die gleich der Leitfähigkeit des Lebensmittels ist. Bevorzugt ist die leitfähige Flüssigkeit Wasser, dessen Leitfähigkeit optional durch Entfernen oder durch den Zusatz von Salz, insbesondere NaCl, eingestellt ist. Zur Regelung der Leitfähigkeit der Flüssigkeit kann die Vorrichtung einen Leitfähigkeitssensor aufweisen, der z.B. in der mit einer Elektrode verbundenen Leitung für Flüssigkeit angebracht ist, und bevorzugt eine abhängig vom Signal des Leitfähigkeitssensors gesteuerte Dosiereinrichtung für die Zugabe von Salz, Salzlake oder Wasser, das entmineralisiert sein kann. Die Dosiereinrichtung kann z.B. in die Leitung für Flüssigkeit, in einen Vorratsbehälter und/oder in einen Auffangbehälter münden. Für Werkstücke, die keine Lebensmittel sind, z.B. aus Metall, Keramik oder leitfähigem Kunststoff oder einer Kombination daraus, kann die leitfähige Flüssigkeit flüssiges Metall sein, z.B. Quecksilber, Zinn, Blei, Zink, Aluminium, jeweils flüssig, oder eine Mischung dieser oder eine wässrige oder organische Elektrolytlösung sein. Generell ist die Leitfähigkeit die Leitfähigkeit für elektrischen Strom.

Es hat sich gezeigt, dass bei einer elektrischen Leitfähigkeit der Flüssigkeit von maximal ±75%, bevorzugt maximal ±50% der Leitfähigkeit, die das Werkstück aufweist, eine effektive Erwärmung des Werkstücks ergibt. Bei einer höheren Leitfähigkeit der Flüssigkeit als die Leitfähigkeit des Werkstücks kann die Flüssigkeit einen Kurzschluß zwischen den Elektroden ausbilden, wenn die Flüssigkeit eine kontinuierliche Phase zwischen den Elektroden bildet, während bei geringerer Leitfähigkeit der Flüssigkeit eine hohe Verlustleistung in der Flüssigkeit auftritt, die kaum oder nicht zur Erwärmung des Werkstücks entlang seiner Längsachse beiträgt.

Vorliegend werden Werkstücke entsprechend der generell bevorzugten Ausführungsform auch stellvertretend als Lebensmittel bezeichnet.

Die Elektroden sind eingerichtet, an beabstandeten, insbesondere endständigen Bereichen der Werkstücke, die insbesondere Lebensmittel sind, angeordnet zu werden, wobei zumindest die erste Elektrode eingerichtet ist, in einem Abstand vom Werkstück angeordnet zu werden und leitfähige Flüssigkeit in diesem Abstand anzuordnen, so dass elektrischer Strom, mit dem die Elektroden beaufschlagt werden, durch die Flüssigkeit, die den Abstand zwischen Elektrode und Werkstück ausfüllt, zum Werkstück fließt und das Werkstück durch den Stromdurchtritt erwärmt wird. Die Elektrode ist eingerichtet, die leitfähige Flüssigkeit in dem Abstand anzuordnen, indem die Flüssigkeit kontinuierlich in diesen Abstand gefördert wird oder in dem Abstand an der Elektrode ein mit leitfähiger Flüssigkeit versehenes, insbesondere damit gefülltes, poröses Material angeordnet ist, bevorzugt eingerichtet, leitfähige Flüssigkeit kontinuierlich oder satzweise in das poröse Material zu fördern.

Durch Beaufschlagen der Elektroden mit elektrischem Strom wird dieser in das Werkstück eingeleitet und kann zwischen den Elektroden durch die Flüssigkeit und durch das Werkstück fließen, z.B. durch zumindest einen Anteil des Querschnitts des Werkstücks bzw. Lebensmittels, wenn die Flüssigkeit, die den Abstand zwischen Elektroden und Werkstück ausfüllt, das Werkstück an beabstandeten Bereichen entlang des Querschnitts kontaktiert und/oder durch zumindest einen Anteil der Längserstreckung des Werkstücks bzw. Lebensmittels, wenn die Flüssigkeit, die den Abstand zwischen Elektroden und Werkstück ausfüllt, dieses in einem Abstand entlang seiner Längserstreckung kontaktiert.

Die zweite Elektrode kann einen Aufbau aufweisen, wie er in Bezug auf die Elektroden, insbesondere die erste Elektrode beschrieben ist, optional gleich der ersten Elektrode sein.

Alternativ kann die zweite Elektrode einen mit leitfähiger Flüssigkeit gefüllten offenen Behälter kontaktieren, in einem solchen Behälter angeordnet sein, oder ein solcher Behälter sein, in dessen offenem Querschnitt ein Teil des Werkstücks, insbesondere eines Lebensmittels, z.B. ein Endabschnitt, angeordnet werden kann. Dabei kann die zweite Elektrode eingerichtet sein, zumindest zwei Werkstücke, insbesondere Lebensmittel, mit deren Endabschnitten aufzunehmen, während die Vorrichtung eingerichtet ist, dass gegenüberliegende Endabschnitte von jeweils von Flüssigkeit, die den Abstand zu einer ersten Elektrode ausfüllt, elektrisch kontaktiert werden. Eine solche zweite Elektrode ist bevorzugt tiefer als erste Elektroden angeordnet und weist optional ein elektrisch erdnahes Potential auf.

Bevorzugt ist die Vorrichtung eingerichtet, insbesondere deren Halteeinrichtung, ein Werkstück mit seiner Längserstreckung bzw. Längsachse etwa vertikal angeordnet zu halten, während seine Enden von jeweils einer Elektrode kontaktiert sind. Die Elektroden sind eingerichtet, ein dazwischen angeordnetes Werkstück an gegenüberliegenden Enden zu kontaktieren, wobei das Werkstück mit seiner Längsachse etwa vertikal von der Halteeinrichtung gehalten ist. Denn bei Anordnung eines Werkstücks mit seiner Längsachse vertikal wird an der oberen Elektrode abgegebene Flüssigkeit an dem Werkstück entlang zu dessen tiefergelegenen Ende fließen. Dabei wird sich die Flüssigkeit gleichmäßig über die Stirnfläche des Werkstücks verteilen, so dass ein gleichmäßiger Stromeintrag von der ersten Elektrode in das Werkstück erfolgen kann. Entsprechend ist bevorzugt, dass Werkstücke um ihre Längsachse eine etwa rotationssymmetrische Form aufweisen, z.B. einen runden Querschnitt, der über die Längsachse konstant oder veränderlich sein kann.

Alternativ ist die Vorrichtung eingerichtet, dass die Elektroden so eingerichtet sind, ein dazwischen angeordnetes Werkstück an gegenüberliegenden Enden zu kontaktieren, wobei ein von der zweiten Elektrode unabhängiger Flüssigkeitskreislauf an der ersten Elektrode oder voneinander unabhängige Flüssigkeitskreisläufe für die erste Elektrode und die zweite Elektrode vorgesehen sind. In dieser Ausführungsform ist jede Elektrode mit einer separaten Einrichtung versehen, die eingerichtet ist, den Abstand zwischen der Elektrode und dem Werkstück mit Flüssigkeit zu überbrücken. Für eine der Elektroden, z.B. eine erste Elektrode, die in einem Abstand oberhalb einer zweiten Elektrode angeordnet ist, kann diese Einrichtung eine mit der ersten Elektrode verbundene nicht elektrisch leitfähige Leitung für elektrisch leitfähige Flüssigkeit, die mit einem elektrisch isolierten Vorratsbehälter verbunden ist, aufweisen, wobei die Leitung die Flüssigkeit in den Abstand zwischen Elektrode und Werkstück fördern kann. Zur Separation einer solchen ersten Zuführleitung oder ersten Einrichtung zum Überbrücken des Abstands der ersten Elektrode vom Werkstück mit elektrisch leitfähiger Flüssigkeit von der zweiten Elektrode kann die erste Einrichtung eine Auffangvorrichtung für die Flüssigkeit aufweisen, die mit einer Rückführleitung mit dem Vorratsbehälter verbunden ist. In der Rückführleitung ist bevorzugt eine Fördereinrichtung angeordnet, die eingerichtet ist, von der Auffangvorrichtung aufgefangene Flüssigkeit in den Vorratsbehälter zu fördern. Die Auffangvorrichtung ist bevorzugt unterhalb der ersten Elektrode angeordnet. Optional ist die Auffangvorrichtung eingerichtet, eine Öffnung, die zwischen der ersten Elektrode und dem Werkstück gebildet wird und von Flüssigkeit überbrückt werden kann, zu überdecken. Bei Anordnung der ersten Elektrode in einem Abstand von einer oberen Stirnseite eines Werkstücks fließt dann die von der ersten Elektrode abgegebene Flüssigkeit über die Stirnseite des Werkstücks bzw. des Lebensmittels und wird unmittelbar danach von einer Auffangvorrichtung, die ein Manschette sein kann, aufgefangen, um danach über die Rückführleitung, den Vorratsbehälter und die mit der ersten Elektrode verbundene Leitung wieder der ersten Elektrode zugeführt zu werden. Eine solche erste Einrichtung zum Ausfüllen und Überbrücken des Abstands zwischen der ersten Elektrode und einem Werkstück, insbesondere dessen oberer Stirnseite, trennt die Flüssigkeit, die der ersten Elektrode zugeführt wird, von der zweiten Elektrode. Die zweite Elektrode ist unterhalb der ersten Elektrode angeordnet und ist dadurch eingerichtet, den Abstand zwischen der zweiten Elektrode und dem Werkstück mit elektrisch leitfähiger Flüssigkeit zu überbrücken, dass sie in einem Behälter angeordnet ist, der eine elektrisch leitfähige Flüssigkeit enthalten kann. Die zweite Elektrode befindet sich z.B. zur Aufnahme des unteren Endstücks des Werkstücks in einem Behälter mit leitfähiger Flüssigkeit.

Somit ist jede elektrische Kontaktierung Elektrode zu Werkstück mit einem eigenständigen Kreislauf oder Behälter mit leitfähiger Flüssigkeit verbunden, die bevorzugt keine elektrische Verbindung miteinander haben. Zumindest eine Fördereinrichtung ist bevorzugt in einer den Vorratsbehälter mit der Elektrode verbindenden Zuführleitung und/oder optional in einer Rückführleitung, die eine Auffangvorrichtung mit dem Vorratsbehälter verbindet, angeordnet.

Bevorzugt weist die Vorrichtung eine Halterung für die Werkstücke, die insbesondere Lebensmittel sind, auf, die eingerichtet ist, die Werkstücke, insbesondere Lebensmittel, in einem Abstand von der ersten Elektrode und/oder der zweiten Elektrode zu halten. Bevorzugt ist die Halterung eingerichtet, die Werkstücke, insbesondere Lebensmittel, mit ihrer Erstreckung entlang ihrer Längsachse, auch lange Erstreckung genannt, etwa vertikal zu halten, z.B. maximal 20° von der Vertikalen, oder in einem Winkel von zumindest 20° oder zumindest 30° zur Vertikalen bis zur Waagerechten zu halten. Eine Halterung kann eine Fördereinrichtung aufweisen oder sein, die eingerichtet ist, die Werkstücke, insbesondere Lebensmittel, in eine Stellung zu bringen und dort zu halten, in der die erste und/oder die zweite Elektrode in einem Abstand zum Werkstück, insbesondere Lebensmittel, angeordnet sind, für den die Vorrichtung eingerichtet ist, dass der Abstand von der leitfähigen Flüssigkeit überbrückt wird. Die Fördereinrichtung kann generell von gegenläufigen und voneinander beabstandeten Förderbändern und/oder Förderrollen gebildet sein, die zwischen sich die Werkstücke, insbesondere Lebensmittel, fördern. Alternativ kann die Fördereinrichtung ein Greifer sein, der an einem Roboterarm gesteuert beweglich und positionierbar ist.

Die Elektroden sind zur Beaufschlagung mit Wechselstrom mit entgegengesetzten Polen einer Stromquelle verbindbar. Die Stromquelle ist z.B. eingerichtet, die Elektroden mit Strom wechselnder Polarität zu beaufschlagen, z.B. im Bereich einer Spannung bis 1000 V, im Bereich eines Stroms bis 100 A und mit einer Frequenz bis 100 kHz, bevorzugt 10 bis 50 kHz. Entsprechend sind die Elektroden mit entgegengesetzten Polen einer Stromquelle verbunden, die eingerichtet ist, die Elektroden mit Strom einer Wechselfrequenz von 1 bis 100 kHz, bevorzugt 10 bis 50 kHz zu beaufschlagen. Dabei dient die Frequenz der Vermeidung von Zersetzungsreaktionen des Lebensmittels angrenzend an die Elektroden. Die Frequenz liegt deutlich unterhalb der Frequenz von Mikrowellen oder Radiowellen, so dass die Erwärmung durch direkten Stromfluß zwischen den Elektroden durch die Flüssigkeit und das Werkstück erfolgt.

Optional wird zumindest die erste Elektrode von einer Manschette eingefasst, die den Abschnitt der leitfähigen Flüssigkeit umfasst, der die Elektrode überragt, wobei die Manschette bevorzugt angepasst ist, dass ein Abschnitt des Werkstücks, insbesondere des Lebensmittels, in die Manschette ragen kann. Dazu kann die Manschette zum Aufnehmen eines Oberflächenabschnitts, insbesondere eines endständigen Abschnitts des Werkstücks, insbesondere des Lebensmittels, eingerichtet sein. Bevorzugt ist die Manschette, z.B. eine Gummimanschette für ein elastisches, dichtendes und/oder formschlüssiges Aufnehmen eines Abschnitts, bevorzugt eines Endabschnitts des Werkstücks, insbesondere Lebensmittels, eingerichtet. Eine solche Manschette kann den Vorteil haben, das Volumen oder die Strömungsrate der leitfähigen Flüssigkeit zu verringern, indem die Flüssigkeit im Bereich zwischen der Elektrode und dem Werkstück gehalten wird. Für Wurst als Lebensmittel ist die Manschette z.B. zur Aufnahme eines endständigen Abschnitts der Wurst eingerichtet. Eine solche Manschette kann eine Auffangvorrichtung bilden. Im Verfahren, insbesondere wenn das Werkstück ein Lebensmittel ist, kann der von der leitfähigen Flüssigkeit (7, 20, 21) auszufüllende Abstand zwischen einer Elektrode und einem Endabschnitt des Werkstücks von einer Manschette umgefasst sein. Dabei kann die leitfähige Flüssigkeit von der Manschette aufgenommen und mittels einer Rückführleitung in den Vorratsbehälter geleitet werden.

Bevorzugt ist unterhalb der Elektroden ein Auffangbehälter angeordnet, der Flüssigkeit, die zur Überbrückung in den Abstand zwischen Elektrode und Werkstück eingebracht wurde, aufzufangen. Weiter bevorzugt weist die Vorrichtung eine Rückführleitung für Flüssigkeit aus dem Auffangbehälter zu der zumindest eine Elektrode auf, deren Abstand zum Werkstück von Flüssigkeit überbrückt wird. Zur Vermeidung eines Stromflusses zwischen den Elektroden über eine Rückführleitung kann die Rückführleitung im mit der Flüssigkeit gefüllten Zustand insgesamt einen höheren elektrischen Widerstand aufweisen, als der Widerstand des Werkstücks zwischen den Elektroden. Dabei kann die Rückführleitung z.B. eine Länge aufweisen, deren Widerstand im mit der Flüssigkeit gefüllten Zustand den höheren elektrischen Widerstand aufweist. Eine solche Länge kann z.B. durch spiralförmige oder in Schleifen geführte Abschnitte der Rückführleitung hergestellt werden.

Alternativ kann der elektrische Widerstand der Rückführleitung dadurch erhöht sein, dass zwischen dem Auffangbehälter und der Rückführleitung zumindest ein Zwischenbehälter angeschlossen ist, dessen Anschluss zum Auffangbehälter und/oder zur Rückführleitung mittels eines Ventils verschließbar ist. In dieser Ausführungsform kann Flüssigkeit aus dem Auffangbehälter in einen Zwischenbehälter strömen, während der Anschluss bzw. ein Ventil zur Rückführleitung geschlossen ist und dieses Ventil erst nach dem Schließen des Ventils zwischen dem Auffangbehälter und dem Zwischenbehälter geöffnet wird. Dabei ist der zumindest eine Zwischenbehälter eingerichtet, abwechselnd nur mit dem Auffangbehälter oder mit der Rückführleitung verbunden zu sein.

Eine weitere Möglichkeit unerwünschten Nebenwiderstand durch Leitfähigkeit des leitfähigen Flüssigkeitskreislaufs zu vermeiden, sind getrennte Flüssigkeitskreisläufe, vorzugsweise für jede Elektrode separat, die nicht miteinander verbunden sind.

Generell ist bevorzugt, dass Leitungen und Behälter für Flüssigkeit sowie daran angeschlossene Steuerorgane, z.B. Ventile, und Pumpen nicht elektrisch leitend sind, z.B. die Bauteile, die mit Flüssigkeit in Kontakt kommen, aus Isoliermaterial sind, insbesondere aus elektrisch nichtleitendem Kunststoff.

Lebensmittel können eine Masse in einer Hülle aufweisen, die aus synthetischem oder natürlichem Material besteht und optional Poren aufweist. Die Hülle kann z.B. aus Kollagen und/oder Cellulose, aus einem modifizierten Kunststoff, optional faserverstärkt und/oder optional perforiert, bestehen. Generell ist die Hülle elektrisch leitfähig, optional durch Poren in der Hülle.

Alternativ können Lebensmittel eine Oberfläche aufweisen, die optional durch oberflächliches Erhitzen der Lebensmittelmasse verfestigt ist bzw. aus verfestiger Lebensmittelmasse besteht, wobei die Lebensmittelmasse nicht von einer zusätzlichen Hülle umfasst ist. Generell kann die Lebensmittelmasse Wurstbrät oder eine Mischung aus pflanzlichen Rohstoffen sein. Das Lebensmittel kann z.B. eine Länge von ca. 0,1 m bis 3 m bei einem Durchmesser von 2 cm bis 30 cm aufweisen.

Bevorzugt ist das Lebensmittel Wurst, z.B. mit einer Oberfläche aus verfestigtem Brät oder mit einer Hülle um das Brät.

Im Verfahren werden die Werkstücke, insbesondere Lebensmittel, an voneinander beabstandeten Oberflächenabschnitten, z.B. Endabschnitten, von einer ersten Elektrode elektrisch kontaktiert, die in einem Abstand zum Oberflächenabschnitt angeordnet wird, wobei der Abstand von leitfähiger Flüssigkeit überbrückt wird, die bevorzugt kontinuierlich oder satzweise in den Abstand gefördert wird. Optional ist an der Elektrode poröses Material angeordnet, dass die Flüssigkeit zumindest anteilig hält.

Die Erfindung wird nun genauer anhand von Beispielen und mit Bezug auf die Figuren erläutert, die schematisch bevorzugte Ausführungsformen der Vorrichtung zeigen.

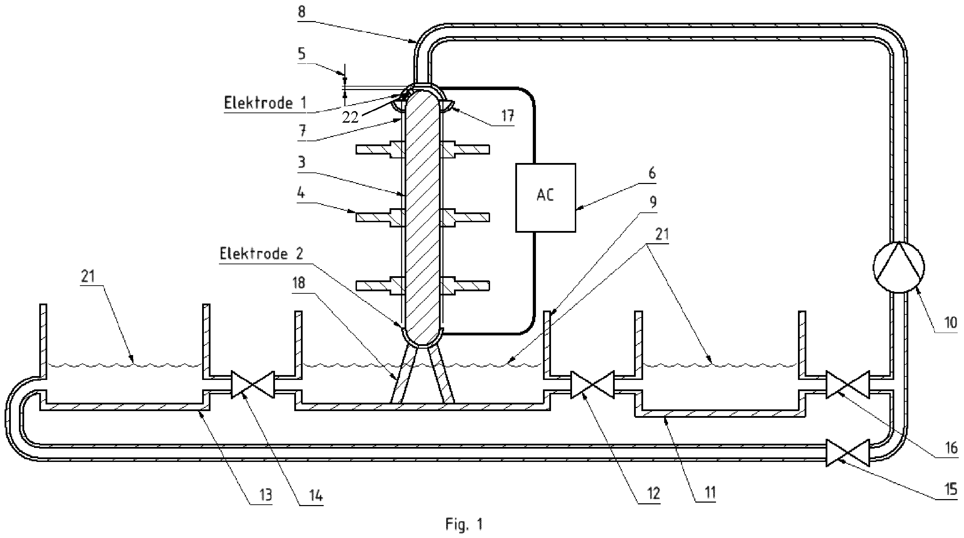

Die Figur 1 zeigt stellvertretend für ein Werkstück 3 ein wurstförmiges Lebensmittel, das in vertikaler Anordnung von einer Halteeinrichtung 4 an z.B. 3 über seine Länge beabstandeten Bereichen geklemmt und gehalten wird. Eine erste Elektrode 1 ist in einem Abstand 5 vom Werkstück 3 angeordnet und mit einer elektrischen Energiequelle 6 verbunden. Die erste Elektrode 1 ist z.B. mittels einer Zuführleitung 8 mit einem elektrisch isolierten Vorratsbehälter 11, 13 für leitfähige Flüssigkeit 21, 7 verbunden und eingerichtet, die Flüssigkeit 7 kontinuierlich oder satzweise, z.B. getaktet, über den Abstand 5 zu fördern. Daher überbrückt die Flüssigkeit 7 den Abstand 5 von der Elektrode 1 zum Werkstück 3. Die Flüssigkeit 7 kann anschließend an das Passieren des Abstands an der Oberfläche des Werkstücks 3 entlanglaufen und vom Werkstück 3 herunterlaufen. In der hier gezeigten Ausführungsform bildet der Vorratsbehälter 9, der unterhalb der Elektroden 1, 2 angeordnet ist, einen Auffangbehälter für die Flüssigkeit.

Die an der entgegengesetzten Polarität der Stromquelle 6 elektrisch angeschlossene zweite Elektrode 2 ist gegenüber der ersten Elektrode 1 am Werkstück 3 angeordnet. Generell kann eine Manschette 17 den Bereich des Abstands 5 überdecken und einen Endabschnitt des Werkstücks 3 überdecken, ohne dessen Oberfläche zu verletzen. In der Rückführleitung 8 ist eine Pumpe 10 angeordnet, die die Flüssigkeit zur ersten Elektrode 1 fördert.

Jede Halteeinrichtung 4 kann eingerichtet sein, das Werkstück 3 mit dessen sich gegenüberliegenden Endabschnitten in einem Abstand 5 an Elektroden 1, 2 zu positionieren und/oder an diesen vorbei zu bewegen, wobei der elektrische Kontakt von den Elektroden 1, 2 zum Werkstück 3 über den Abstand 5 durch die leitfähige Flüssigkeit 7, 20, 21 hergestellt wird. Die Halteeinrichtung 4 kann z.B. ein Greifer sein, der eingerichtet ist, jeweils ein Werkstück 3 in den Bereich zwischen den Elektroden 1, 2 zu positionieren.

In der gezeigten Ausführungsform kann die zweite Elektrode 2 schalenförmig ausgebildet sein und einen Endabschnitt des Werkstücks 3 aufnehmen und stützen. Flüssigkeit 7, die aus dem Abstand 5 austritt und entlang des Werkstücks 3 läuft, überbrückt einen Abstand der zweiten Elektrode 2 zum Werkstück 3 und stellt den elektrischen Kontakt zwischen diesen her. Die zweite Elektrode 2 kann mit Stützen 18 oberhalb des Auffangbehälters 9 gehalten sein.

Die Figur 1 zeigt eine Ausführungsform, bei der zwischen dem Auffangbehälter 9, der auch als Vorratsbehälter 9 dient, und der Rückführleitung 8 ein Zwischenbehälter 11 und 13 angeschlossen ist, wobei zwischen dem Auffangbehälter 9 und dem Zwischenbehälter 11 ein Ventil 12, 14 angeordnet ist, und zwischen dem Zwischenbehälter 11 und 13 und der Rückführleitung 8 ein weiteres Ventil 15, 16 angeordnet ist, die abwechselnd geöffnet werden, um eine elektrische Verbindung durch die Flüssigkeit 7, 20, 21 durch den Auffangbehälter 9 zum Fördersystem 8, 10 zu unterbrechen. Für eine kontinuierliche Förderung von Flüssigkeit 7, 20, 21 aus dem Auffangbehälter 9 durch die Rückführleitung 8 kann die Vorrichtung einen weiteren Zwischenbehälter 13 aufweisen, der durch Ventile 14, 15 abwechselnd mit dem Auffangbehälter 9 und der Rückführleitung 8 verbunden werden kann. Bevorzugt sind die Ventile 12, 14, 15, 16 sowie der Auffangbehälter 9 und die Zwischenbehälter 11, 13 sowie alle Leitungen für Flüssigkeit 7, insbesondere die Rückführleitung 8, nicht oder wenig elektrisch leitfähig. Optional ist ein poröses Material an einer Elektrode oder an beiden Elektroden 1, 2, insbesondere nur an der ersten Elektrode 1 angebracht, das die Flüssigkeit 7, 20, 21 in dem Abstand 5 hält.

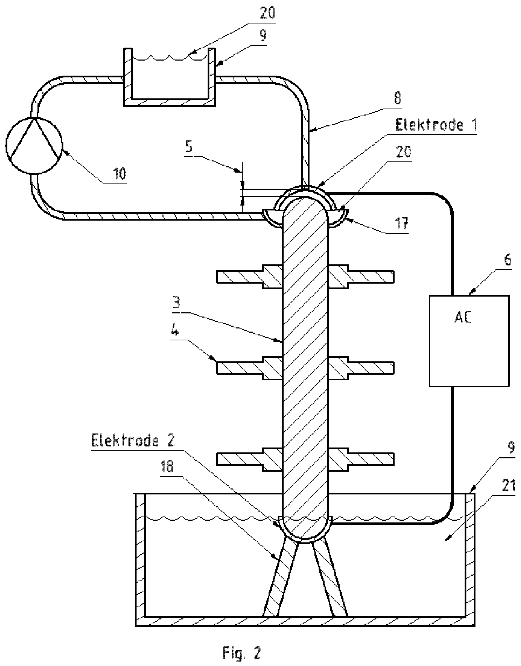

Figur 2 zeigt eine weitere Ausgestaltung der Erfindung. Ein wurstförmiges Lebensmittel 3 wird in vertikaler Anordnung von einer Halteeinrichtung 4 an z.B. 3 über seine Länge beabstandeten Bereichen eingeklemmt und gehalten. Eine erste Elektrode 1 ist in einem Abstand 5 vom Werkstück 3 angeordnet und mit einer elektrischen Energiequelle 6 verbunden. Die erste Elektrode 1 ist z.B. mittels einer Zuführleitung 8 nebst Pumpe 10 und Manschette 17, die eine Auffangvorrichtung bildet, für leitfähige Flüssigkeit 20 verbunden und eingerichtet, die Flüssigkeit 20 kontinuierlich oder getaktet über den Abstand 5 zu fördern. Die Flüssigkeit 20 fließt aufgrund der manschettenartigen Auffangvorrichtung 17 , der sich auf elektrischem Potential der ersten Elektrode 1 befindet, bevorzugt nicht entlang der Oberfläche des Werkstücks 3, sondern zirkuliert im Kreislauf 8 der Pumpe 10. Eine Rückführleitung 8 leitet die Flüssigkeit aus der Auffangvorrichtung 17 in den Zwischenspeicher 9.

Die an der entgegengesetzten Polarität der Stromquelle 6 elektrisch angeschlossene zweite Elektrode 2 ist gegenüber der ersten Elektrode 1 am Werkstück 3 angeordnet und befindet sich bevorzugt in einem Vorratsbehälter 9 mit leitfähiger Flüssigkeit 21, die sich auf elektrischem Potential der zweiten Elektrode 2 befindet.

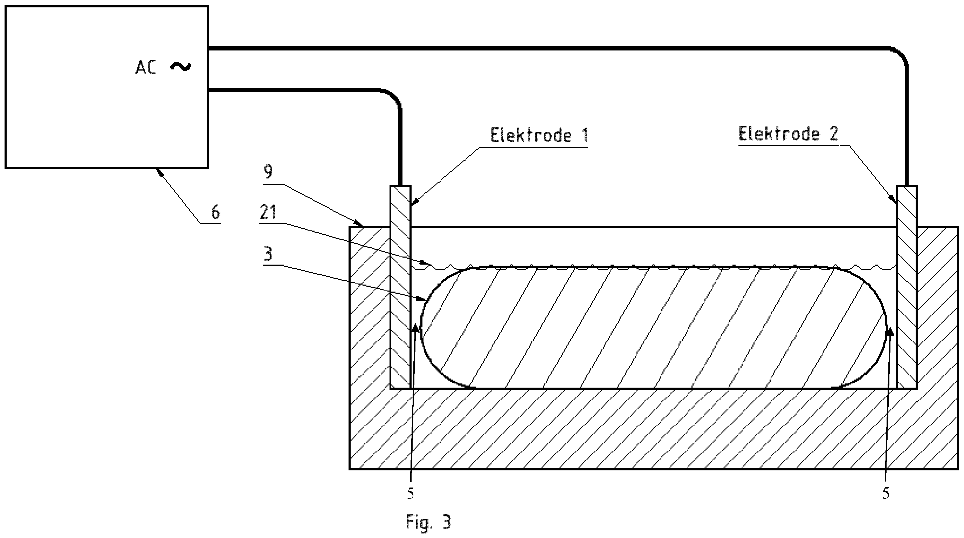

Figur 3 zeigt eine Ausführungsform, bei der eine erste Elektrode 1 und eine zweite Elektrode 2, jeweils mit der Stromquelle 6 elektrisch verbunden, in einem Abstand voneinander angeordnet sind und jeweils mit Abstand 5 zu den Elektroden 1, 2 ein Lebensmittel 3 zwischen den Elektroden 1, 2 angeordnet ist. Der Abstand 5 wird von leitfähiger Flüssigkeit 21 ausgefüllt und überbrückt. Es hat sich gezeigt, dass der Stromfluss durch das Lebensmittel 3, das bevorzugt Wurst ist, zur Erwärmung führt, wenn bevorzugt die Leitfähigkeit der leitfähigen Flüssigkeit 21 maximal 50 % geringer als die Leitfähigkeit des Lebensmittels ist. Dabei kann die Flüssigkeit 21 das Lebensmittel 3 vollumfänglich einfassen bzw. bedecken, oder das Lebensmittel 3 nur anteilig bedecken. Das Lebensmittel kann generell, insbesondere in dieser Ausführungsform, in einem Behälter, hier als Vorratsbehälter 9 oder generell als Auffangvorrichtung bezeichnet, angeordnet sein, wobei das Lebensmittel über seinen gesamten Querschnitt von der leitfähigen Flüssigkeit überdeckt wird.

**Bezugszeichen:**

| | | | |
|---|---|---|---|
| 1 | erste Elektrode | 12 | Ventil |
| 2 | zweite Elektrode | 13 | Zwischenbehälter |
| 3 | Werkstück, Lebensmittel | 14 | Ventil |
| 4 | Halteeinrichtung | 15 | Ventil |
| 5 | Abstand | 16 | Ventil |
| 6 | Stromquelle | 17 | Auffangvorrichtung, z.B. Manschette |
| 7 | leitfähige Flüssigkeit | 18 | Stütze |
| 8 | Rückführleitung | 20 | leitfähige Flüssigkeit |
| 9 | Vorratsbehälter | 21 | leitfähige Flüssigkeit |
| 10 | Fördereinrichtung, Pumpe | 22 | poröses Material |
| 11 | Zwischenbehälter | | |

## Patentansprüche

1. Vorrichtung zum Erwärmen von zumindest einem Werkstück (3) durch Beaufschlagen zumindest eines Werkstücks (3) mit elektrischem Strom mittels zweier Elektroden (1, 2), von denen zumindest eine erste Elektrode (1) eingerichtet ist, in einem Abstand (5) von einem ersten Ende des zumindest einen Werkstücks (3), das bevorzugt ein in einer leitfähigen Hülle angeordnetes Lebensmittel ist, angeordnet zu werden, wobei die Vorrichtung eingerichtet ist, dass der Abstand (5) von einer leitfähigen Flüssigkeit (7, 20, 21) überbrückt wird, wobei die zweite der Elektroden (2) eingerichtet ist, an dem dem ersten Ende entlang seiner Längsachse gegenüberliegenden zweiten Ende des zumindest einen Werkstücks (3) angeordnet zu werden, wobei die leitfähige Flüssigkeit (7, 20, 21) eine elektrische Leitfähigkeit aufweist, die um maximal 75%, bevorzugt maximal 50 % von der elektrischen Leitfähigkeit des Werkstücks (3) abweicht.

2. Vorrichtung nach Anspruch 1, **dadurch gekennzeichnet, dass** die erste Elektrode (1) dadurch eingerichtet ist, dass der Abstand (5) von einer leitfähigen Flüssigkeit (7, 20, 21) überbrückt wird, dass sie mittels einer Zuführleitung (8) mit einem Vorratsbehälter (9) verbunden ist und die Zuführleitung (8) eingerichtet ist, die leitfähige Flüssigkeit (7, 20, 21) kontinuierlich oder stoßweise aus dem Vorratsbehälter (9) in den Abstand (5) zu fördern.

3. Vorrichtung nach einem der voranstehenden Ansprüche, **dadurch gekennzeichnet, dass** ein Vorratsbehälter (9) an entlang seiner Längsachse gegenüberliegenden Enden jeweils eine von erster und zweiter Elektrode (1, 2) aufweist und der Vorratsbehälter (9) eingerichtet ist, zumindest ein Werkstück (3) mit seiner Längsachse entlang der Längsachse des Vorratsbehälters (9) aufzunehmen.

4. Vorrichtung nach einem der voranstehenden Ansprüche, **dadurch gekennzeichnet, dass** die erste Elektrode (1) eingerichtet ist, am ersten Ende eines einzelnen Werkstücks (3) angeordnet zu werden und die zweite Elektrode (2) eingerichtet ist, am zweiten Ende desselben Werkstücks (3) angeordnet zu werden.

5. Vorrichtung nach einem der voranstehenden Ansprüche, **gekennzeichnet durch** eine Auffangvorrichtung (17), die eingerichtet ist, den Abstand (5) zu überdecken und leitfähige Flüssigkeit (7, 20) aufzunehmen, wobei die Auffangvorrichtung (17) mittels einer Rückführleitung (8) mit dem Vorratsbehälter (9) verbunden ist.

6. Vorrichtung nach einem der voranstehenden Ansprüche, **dadurch gekennzeichnet, dass** eine von der ersten Elektrode (1) entlang der Oberfläche des Werkstücks (3) beabstandet anzuordnende zweite Elektrode (2) oberhalb eines Auffangbehälters (9) angeordnet ist, der einen Vorratsbehälter (9) bildet und die Vorrichtung eine Rückführleitung (8) für Flüssigkeit (7) vom Auffangbehälter (9) zur ersten Elektrode (1) aufweist.

7. Vorrichtung nach einem der voranstehenden Ansprüche, **dadurch gekennzeichnet, dass** sie eine Halteeinrichtung (4) aufweist, die eingerichtet ist, ein Werkstück (3) zwischen den Elektroden (1, 2) mit vertikaler Ausrichtung der Längsachse des Werkstücks (3) anzuordnen.

8. Vorrichtung nach einem der voranstehenden Ansprüche, **dadurch gekennzeichnet, dass** die erste Elektrode (1) dadurch eingerichtet ist, dass der Abstand (5) von einer leitfähigen Flüssigkeit (7) ausgefüllt und überbrückt wird, dass ein mit leitfähiger Flüssigkeit (7, 20,21) gefülltes poröses Material (22) in dem Abstand (5) angeordnet ist, wobei die Vorrichtung optional eingerichtet ist, leitfähige Flüssigkeit (20,21) durch poröses Material (22) innerhalb des Abstands (5) zu fördern.

9. Vorrichtung nach einem der voranstehenden Ansprüche, **dadurch gekennzeichnet, dass** die erste Elektrode mittels einer nicht elektrisch leitfähigen Leitung (8) für Flüssigkeit (7, 20, 21) mit einem elektrisch isolierten Vorratsbehälter (11) verbunden ist, um die leitfähige Flüssigkeit (7, 20, 21) in den Abstand (5) zu fördern.

10. Vorrichtung nach einem der voranstehenden Ansprüche, **dadurch gekennzeichnet, dass** der von der leitfähigen Flüssigkeit (7, 21) zu überbrückende Abstand (5) von einer Manschette (17) eingefasst ist.

11. Vorrichtung nach einem der voranstehenden Ansprüche, **gekennzeichnet durch** einen Leitfähigkeitssensor, der in der mit der ersten Elektrode (1) verbundenen Leitung (8) für Flüssigkeit angebracht ist, und eine abhängig vom Signal des Leitfähigkeitssensors gesteuerte Dosiereinrichtung für die Zugabe von Salz, Salzlake oder Wasser in die Flüssigkeit, wobei die Dosiereinrichtung gesteuert ist, die leitfähige Flüssigkeit (7) auf eine Leitfähigkeit einzustellen, die um maximal 50 % von einer vorbestimmten Leitfähigkeit abweicht, die der Leitfähigkeit des Lebensmittels entspricht.

12. Verfahren zum Erwärmen von einzelnen Werkstücken (3), insbesondere mittels einer Vorrichtung nach einem der voranstehenden Ansprüche, durch Beaufschlagen eines einzelnen Werkstücks (3) mit elektrischem Strom mittels zweier beabstandeter Elektroden (1, 2), **dadurch gekennzeichnet, dass** zumindest eine erste der Elektroden (1) in einem Abstand (5) von einem ersten Ende des Werkstücks (3) angeordnet wird und eine leitfähige Flüssigkeit (7, 20,21) den Abstand (5) überbrückt und eine zweite der Elektroden (2) an dem dem ersten Ende entlang seiner Längsachse gegenüberliegenden zweiten Ende des Werkstücks angeordnet ist.

13. Verfahren nach Anspruch 12, **dadurch gekennzeichnet, dass** die leitfähige Flüssigkeit (20, 21, 7) den Abstand (5) dadurch ausfüllt und überbrückt, dass sie aus einem elektrisch isolierten Vorratsbehälter (9) durch eine nicht elektrisch leitfähige Leitung (8) kontinuierlich in den Abstand (5) zwischen der ersten Elektrode (1) und dem ersten Ende des Werkstücks gefördert wird.

14. Verfahren nach Anspruch 12 oder 13, **dadurch gekennzeichnet, dass** die leitfähige Flüssigkeit (7, 20, 21) den Abstand (5) dadurch überbrückt, dass sie zumindest anteilig von einem porösen Material (22) zurückgehalten wird, das zwischen zumindest einer der Elektroden (1, 2) und dem Werkstück (3) angeordnet ist.

15. Verfahren nach einem der Ansprüche 12 bis 14, **dadurch gekennzeichnet, dass** das einzelne Werkstück (3) ein Lebensmittel ist und die leitfähige Flüssigkeit (7) eine Leitfähigkeit aufweist, die um maximal 50 % von der Leitfähigkeit des Lebensmittels abweicht.

16. Verfahren nach einem der Ansprüche 12 bis 15, **dadurch gekennzeichnet, dass** die Werkstücke (3) Lebensmittel sind und dass deren Oberfläche von den Elektroden (1, 2) nicht berührt wird und dass der von der leitfähigen Flüssigkeit (7, 20, 21) auszufüllende Abstand (5) und ein Endabschnitt des Lebensmittels (3) von der Manschette (17) umfasst wird.
